# EUROPEAN PATENT SPECIFICATION

(11) **EP 3 285 221 B1**
(45) Date of publication and mention of the grant of the patent: **12.02.2020**
(21) Application number: 16895733.0
(22) Date of filing: 15.12.2016
(51) Int. Cl.: H04L 29/06, G06Q 20/40, G06K 9/00, G06Q 20/34, G06Q 20/38, G06Q 20/32, H04L 9/32

(54) **CARD PAYMENT PROCESSING SYSTEM USING BIOMETRIC INFORMATION AND PROCESSING METHOD THEREOF**
KARTENZAHLUNGSVERARBEITUNGSSYSTEM MIT VERWENDUNG VON BIOMETRISCHEN INFORMATIONEN UND VERARBEITUNGSVERFAHREN DAFÜR
SYSTÈME DE TRAITEMENT DE PAIEMENT PAR CARTE UTILISANT DES INFORMATIONS BIOMÉTRIQUES ET PROCÉDÉ DE TRAITEMENT ASSOCIÉ

(30) Priority: 31.05.2016 KR 20160067663
(43) Date of publication of application: 21.02.2018
(73) Proprietor: Jini Co. Ltd., Jeonju-si, Jeollabuk-do 54853 (KR)
(72) Inventor: JEONG, Hye Jin, Iksan-si Jeollabuk-do 54625 (KR); LEE, Si Hyeon, Iksan-si Jeollabuk-do 54639 (KR); PARK, Hye Sung, Mapo-gu Seoul 03993 (KR)
(74) Representative: Cabinet Chaillot
(86) International application number: PCT/KR2016/014704
(87) International publication number: WO 2017/209364

(56) References cited:
- JP-A- 2007 109 075
- KR-A- 20050 023 757
- KR-A- 20050 023 757
- KR-A- 20060 034 228
- KR-A- 20100 032 935
- KR-A- 20120 076 589
- KR-A- 20130 050 039
- US-A1- 2007 094 512
- US-A1- 2010 095 130

## Description

### TECHNICAL FIELD

The present invention relates to a card payment system for using body information, and more particularly, to a card payment system for using body information and a method thereof which improve security in the card payment by using body information and a cryptogram search key.

### BACKGROUND ART

A biometrics-based authentication is a technology which identifies a person by unique characters of a fingerprint, an iris, a vein, a face, or etc. It also includes a human voice, a handwriting, a body type, and a manner of walking. These body informations are unique depend on a person, so it is easy to identify and there is rare risk to be lost or stolen as long as the body is not mutilated. Futher, the iris and the vein are very difficult to be forged. Thus, such a biometrics-based authentication is emerging as reliable means of security in this Fin Tech era which merges information technology and finance.

However, there are many problems to be solved in the biometrics-based authentication because each body information is one and only. Especially, it is a key point to reduce user's psychological objection or concern of the body information's leakage. If the biometrics-based authentication is abused by a hacking or etc., its damage would be bigger than a leaked password.

To prevent such a damage, a card payment system needs to prevent a leakage of information in a process of encypted card information's decryption at the same time of using body information in the card payment.

### [Related Art Documents]

Patent Document 1: Korean Patent No. 10-0762971 (Issue date: October 2, 2007)
Patent Document 2: Korean Patent No. 10-0876003 (Issue date: December 26, 2008)
Patent Document 3: Korean patent Application Laid-Open Publication No. 10-2013-0008125 (publication date: January 22, 2013)
Patent Document 4: Korean patent Application Laid-Open Publication No. 10-2013-0050039 (publication date: May 15, 2013)

Further, KR 2005 0023757 A relates to a method and a system for credit card settlement using fingerprint information on a member shop device are provided to perform the credit card settlement and accumulate point without a card by searching/identifying a customer through a fingerprint recognition technology.

US 2010/095130 A1 relates to authenticating parties to a transaction. Systems and methods for programming a secured smartcard are described therein
US 2007/094512 A1 relates to a technology to validate or issue storage media, including cash cards, credit cards and ID cards wherein the storage media include magnetic cards and IC cards, and further to a technology that verifies the identity of a card holder by using biometric information when the card holder requests services. A technology to store information including biometric information in storage media is also described therein.

### DISCLOSURE OF INVENTION

### TECHNICAL PROBLEM

An object of the present invention is to provide a card payment system and its method which reduce a risk of personal information's lost, stolen, or forged using body information to strengthen security of a card payment and to process a payment without decryption of encrypted information.

Another object of the present invention is to provide the card payment system and its method which, if the first body information and the second body information which are brought from a IC card and the IC card's user are same, finds a pre-registered cryptogram of the card information using a password key and a cryptogram search key, and processes the payment if the found cryptogram and a generated cryptogram which are generated with the card information of the IC card are same.

### TECHNICAL SOLUTION

In order to achieve the objects, an aspect of the present invention is directed to a card payment system in which a server receives a cryptogram search key and a password key from a user terminal unit, the server generates a card information cryptogram table and a cryptogram search key table, if the first and the second body information are same, a card reader transmits a card information cryptogram to the server, and the server compares the transmitted card information cryptogram and a corresponding card information cryptogram of the card information cryptogram of the table to process a payment approval.

According to the aspect of the present invention, the card payment system includes: a communication network; an IC card saving a card information and a first body information of a cardholder which are identifiable; a card reader obtaining the card information and the first body information through reading the IC card, obtaining a second body information from a user of the IC card, obtaining a user password key which is for an encryption of the card information if the first body information and the second body information are same, generating a user card information cryptogram by using the user password key, and transmitting the user password key, the user card information cryptogram and a payment information via the communication network requesting a payment approval; and a server including a cryptogram search key table where a plural password key and a plural cryptogram search key which has an access authority to a certain card information cryptogram are match one by one and a card information cryptogram table where a plural card information cryptogram which is generated by using a certain password key and a plural password key are match one by one, finding, from the cryptogram search key table, a corresponding cryptogram search key of the cryptogram search key table which corresponds to the user password key which is transmitted from the card reader, finding, from the card information cryptogram table, a corresponding card information cryptogram of the card information cryptogram table which corresponds to the corresponding cryptogram search key, processing the payment approval for the card reader if the user card information cryptogram and the corresponding card information cryptogram are same.

According to an exemplary embodiment of the aspect, the card payment system further comprises a user terminal unit which transmits the user password key to the card reader if the card reader requests an input of the user password key to the user terminal unit via the communication network.

In another exemplary embodiment of the aspect, the user terminal unit transmits the plural cryptogram search key and the plural password key to the server via the communication network for the server to generate the card information cryptogram table and the cryptogram search key table.

In another exemplary embodiment of the aspect, the card reader includes: a communication unit; a IC card reader unit obtaining the card information and the first body information through reading the IC card; a body information reader unit obtaining the second body information from the user of the IC card; a body information identifying module checking if the first body information and the second body information are same; an encryption module generating the card information cryptogram by using the user password key; and a payment processing module, receiving the user password key if the first body information and the second body information are same at the body information identifying module, providing the user password key to the encryption module, receiving the user card information cryptogram from the encryption module, receiving the payment information, requesting the payment approval to the server, and displaying a result of the payment approval if the server processes the payment approval.

In another aspect of the present invention, the present invention is directed to a method of the card payment system in which a card reader, a user terminal unit and a server are connected to each other via a communication network, finding a card information cryptogram by using IC card information, the first and second body information to process a payment approval.

According to the another aspect of the present invention, the method of the card payment system includes: generating, by a server, a cryptogram search key table where a plural password key which is to encrypt a card information of a IC card which saves the card information and a first body information and a plural cryptogram search key which has an access authority to a certain card information cryptogram which is an encryption result of a certain card information by a certain password key are match one by one and generating, by a server, a card information cryptogram table where the plural cryptogram search key and a plural card information cryptogram are match one by one; checking, by a card reader, if the first body information which is obtained from the IC card together with the card information and a second body information which is obtained from a user of the IC card are same; generating, by the card reader, a user card information cryptogram after receiving a user password key by using the user password key if the first body information and the second body information are same; finding, by the server, a corresponding cryptogram search key from the cryptogram search key table which corresponds to the user password key and a corresponding card information cryptogram of the card information cryptogram table which corresponds to the corresponding cryptogram search key if the card reader requests a payment approval; checking, by the server, if the user card information cryptogram which is transmitted from the card reader and the corresponding card information cryptogram are same; and processing, by the server, the payment approval if the user card information cryptogram and the corresponding card information cryptogram are same.

According to an exemplary embodiment of the aspect, in the generating of the server, the server generates the cryptogram search key table using a plural cryptogram search key which is transmitted from a user terminal unit via a communication network, and generates the card information cryptogram table using a plural password key which is transmitted from the user terminal unit via a communication network.

As another exemplary embodiment, in the generating of the card reader, the card reader requests an input of the user password key to the user terminal unit, and the user terminal unit transmits the user password key to the card reader.

It is to be understood that both the foregoing general description and the following detailed description of the present invention are exemplary and explanatory and are intended to provide further explanation of the invention as claimed.

### ADVANTAGEOUS EFFECTS

As described above, the card payment system and its method of the present invention can provide reliable means of authentication by using the body information, and can prevent the leakage of information by omitting the decryption of the card information cryptogram.

### BRIEF DESCRIPTION OF THE DRAWINGS

The accompanying drawings, which are included to provide a further understanding of the inention and are incorporated in and constitute a part of this application, illustrate embodiments of the inention and together with the decription serve to explain the principle of the invention. In the drawings:
FIG. 1 is a diagram illustrating a configuration of a card payment system for using body information according to an embodiment of the present invention;
FIG. 2 is a diagram illustrating a data sturcture of the card information and the first body information in FIG. 1 according to an embodiment of the present invention;
FIG. 3 is a diagram illustrating a configuration of the card reader in FIG. 1 according to an embodiment of the present invention;
FIG. 4 is a diagram illustrating a configuration of the server in FIG. 1 according to an embodiment of the present invention;
FIG. 5a and 5b are the card information cryptogram table and the cryptogram search key table in FIG. 4 according to an embodiment of the present invention; and
FIG. 6 is a flowchart illustrating a processing sequence of the card payment system for using body information according to an embodiment of the present invention.

### BEST MODE FOR CARRYING OUT THE INVENTION

Exemplary embodiments of the present invention can have other modifications and variations, and the scope of this present invention should not be limited by the embodiments described below. These exemplary embodiments of the present invention are provided in order to better explain the present invention to others skilled in the art. Thus, the some of elements of the drawing are exaggerated in their shape for a clear explanation.

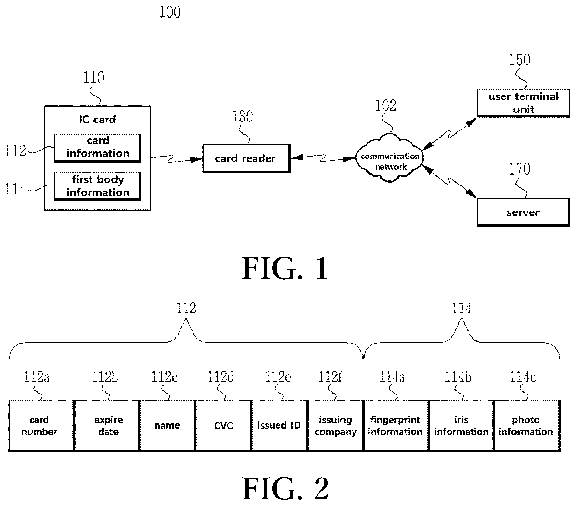

Hereinafter, embodiments of the present invention will be described in detail with reference to FIG. 1 to FIG. 6.

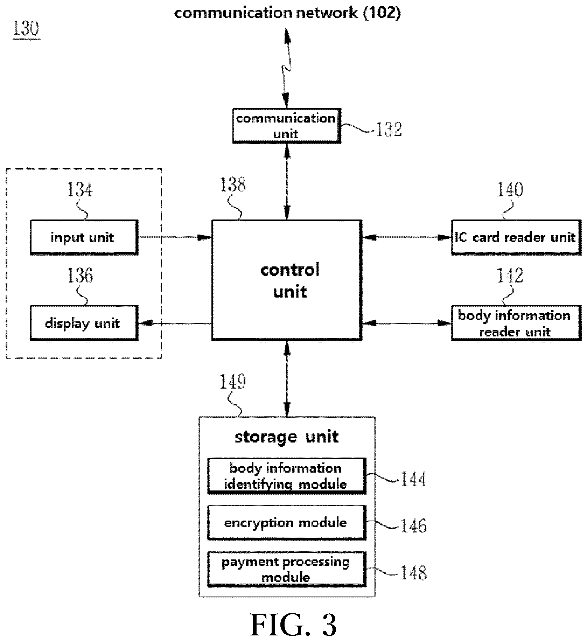

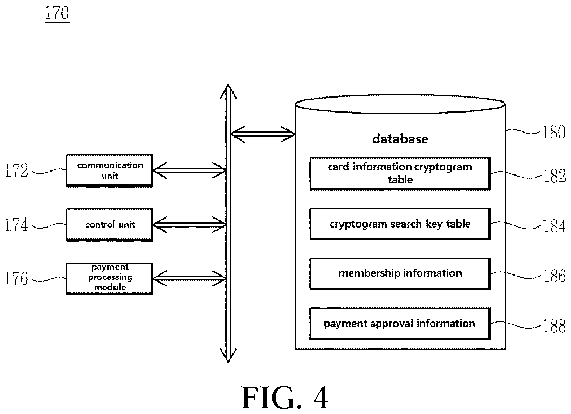

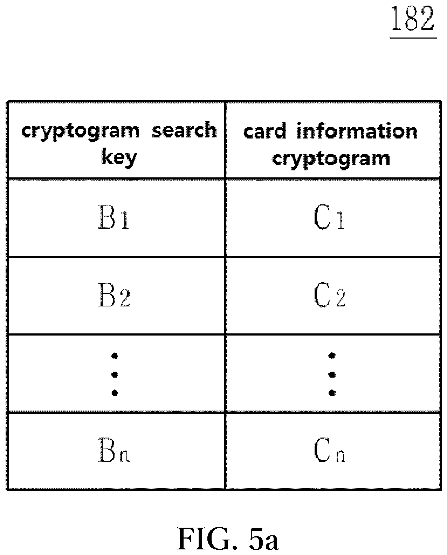

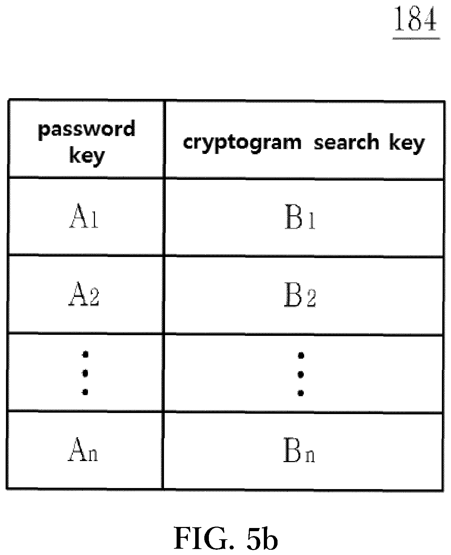

FIG. 1 is a diagram illustrating a configuration of a card payment system for using body information according to an embodiment of the present invention, FIG. 2 is a diagram illustrating a data sturcture of the card information and the first body information in FIG. 1, FIG. 3 is a diagram illustrating a configuration of the card reader in FIG. 1, FIG. 4 is a diagram illustrating a configuration of the server in FIG. 1, and FIG. 5a and 5b are the card information cryptogram table and the cryptogram search key table in FIG. 4.

As shown in FIG. 1 to FIG. 5b, the card payment system of the present invention, to prevent leakage of information by omitting decryption of card information cryptogram with means of authentication which are impossible to be stolen or copied by other persons, provides a card payment system 100 for using body information which checks, by a card reader 130, if the first body information and the second body information are same, which are took from a IC card 110 and a user of the IC card 110, and compares a card information cryptogram which are transmitted from the card reader 130 to a server 170 with other card information cryptogram which are stored in a database 180 of the server 170.

Here, the card reader 130 and the server 170 are connected with each other via a communication network 102. Also, the communication network 102 may be connect with the card reader 130, a user terminal unit 150, and the server 170 via wire or wireless channel.

Specifically, the IC card 110 includes intergrated circuits, a memory which may read and write data multiple times and a processor which may encrypt data, be programed for the IC card to be compatible with specific computer models or etc. as well as simply save data. Here, the memory saves: data which includes card information 112 such as a card number 112a, an expire date 112b, a name 112c, CVC 112d, an issued ID 112e and an issuing company 112f; and another data which includes the first body information 114 such as fingerprint information 114a, iris information 114b and photo information 114c for the card reader 130 to check with, and the memory may provide the card information 112 and the first body information 114 to the server 170. Also, the photo information 114c may include information of user's face which may be used for checking with means of face's three-dimensional shape or face's thermal distribution. Futher, the first body information 114 may include vein information, voice information for a user authentication as well as the fingerprint information 114a, the iris information 114b and the photo information 114c.

The card information 112 and the first body information of the IC card 100 are encrypted and saved in the server 170 as multiple card information cryptograms. Also, at least one of the card information cryptograms which is saved in the server 170 and at least one of the card information cryptograms of the card information 112 which is read by the card reader 130 are compared for processing of a payment approval.

The card reader 130 is connected to the user terminal unit 150 and the server 170 via the communication network 102, and transmits the card information cryptogram which is encrypted from the card information 112 of the IC card 110 that are read by the card reader 130 and receives password keys which is transmitted from the user terminal unit 150. The card reader 130 includes: a communication unit 132; a control unit 138; a IC card reader unit 140; a body information reader unit 142; a body information identifying module 144; an encryption module 146; and a payment processing module 148. Also, the card reader 130 may further include an input unit 134 and a display unit 136. Here, the body information identifying module 144, the encryption module 146 and the payment processing module 148 may be included in a storage unit 149. Also, the input unit 134 and the display unit 136 may be provided as various forms of a user interface such as a touch panel, a software keypad, or etc.

The communication unit 132 is connected with the communication network 102, requests an input of a password key to the user terminal unit 150, receives the password key, and provides the password key to the control unit 138.

The control unit 138 checks if the first body information 114 which is from the IC card 110 and the second body information which is from the user of the IC card 110 are same by controlling the IC card reader unit 140, the body information reader unit 142, the storage unit 149 and a user interface, generates a card information cryptogram by encrypting the card information 112 of the IC card 110 with a password key which is transmitted from the user terminal unit 150 to the card reader 130 or input to the input unit 134, and transmits payment information which includes payment amount, the password key and the card information cryptogram, or etc. to the server 170 for processing of a payment approval.

The IC card reader unit 140 takes the card information 112 and the first body inforatmion 114 by reading the IC card 110.

The body information reader unit 142 takes the second body information from a user of the IC card 110. Here, the body information reader unit 142 may include: a fingerprint sensor which may recognize a user's fingerprint, an iris sensor which may recognize a user's iris and a face sensor which may recognize a user's face.

The body information identifying module 144 checks if the first and the second body information are same.

The encryption module 146 generates the card information cryptogram by encrypting the card information 112 of the IC card 110 with the password key which is transmitted from the user terminal unit 150 to the card reader 130 or input to the input unit 134.

The payment processing module 148 receives the password key from the user terminal unit 150 if the first and the second body information are same at the body information identifying module 144, provides the password key to the encryption module 146, and takes the card information cryptogram from the encryption module 146. Also, the payment processing module 148 receives payment information, requests a payment approval to the server 170, processes to display a result of the payment approval if the server 170 gives the result. Here, the payment processing module 148, to request the payment approval, transmits the password key which is transmitted from the user terminal unit 150 or input to the input unit 134, the card information cryptogram which is encrypted in the ecryption module 146 and the payment information to the server 170.

The input unit 134 receives the payment information which includes the payment amount, the number of months for an installment plan or etc., and provides the payment information to the control unit 138.

The display unit 136 displays, by controlling of the control unit 138, the result of the payment approval which comes from the server 170.

The server 170 is connected to the card reader 130 and the user terminal unit 150 via the communication network 102, if the user terminal unit 150 transmits multiple cryptogram search keys to the server 170, matches, one by one, the cryptogram search keys with multiple card information cryptograms which are stored in the server 170 at the time of the IC card 110's issuance, saves the matched cryptogram search keys in a card information cryptogram table 182, if the user terminal unit 150 transmits multiple password keys which are different to each other to the server 170, the server matches, one by one, the password keys with the cryptogram search keys which are saved in the card information cryptogram table 182, saves the matched password keys in a cryptogram search key table 184. Here, each cryptogram search key which is transmitted from the user terminal unit 150 to the server 170 means an access authority for a certain card information cryptogram which is stored in the server 170, in other words, it is a permitted authority for a specific user, a specific program, a specific processe, or a computer system in a specific computer network. The cryptogram search keys are matched one by one with the card information cryptograms which are stored in the server 170 under a certain rule such as matching in order or matching randomly. Also, the server 170, if the multiple password keys are received from the user terminal unit 150 to the server 170, brings field values of the cryptogram search keys in the card information cryptogram table 182 or brings the cryptogram search keys themselves, and processes one by one matching with the password keys under a certain rule such as matching in order or matching randomly. The card information cryptogram table 182 and the cryptogram search key table 184 which are generated by the maching process are used for payment approval processes by a finding corresponding card information cryptogram of the card information cryptogram table 182 if a user pays with the IC card 110.

The card information cryptogram table 182 and the cryptogram search key table 184 are set up at the time of the IC card 110's issuance or the IC card 110's registration, and saved in the database 180. Also, the database 180 saves user's membership information 186 which are registered at the time of the IC card 110's issuance, such as a phone number, an address, or etc. and payment approval information 188 which is a history of approved payments.

In FIG. 4, the database 180, by the communication unit 172, is connected to the card reader 130 and the user terminal unit 150 via the communication network 102, generates informations, saves the information in the database 180, and uses the informations which is saved in the database 182. Also, the payment processing module 176 compares a card information cryptogram of the card information cryptogram table 182 with another card information cryptogram which is transmitted from the card reader 130, checks if they are same, and processes an approval or a refusal of the payment as a result of the checking.

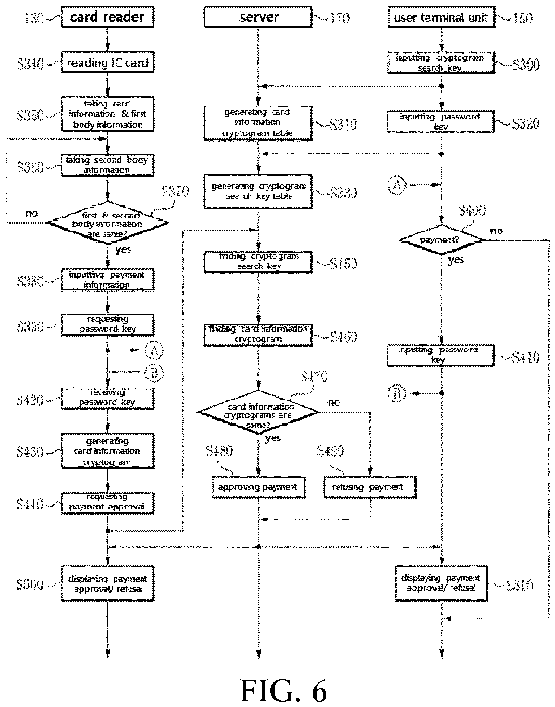

Methods of the card payment system 100 for using body information according to an embodiment of the present invention will be described specifically with reference to FIG. 6. The card payment system 100 where the card reader 130, the user terminal unit 150 and the server 170 are connected to each other via the communication network 102 processes sequences of the card payment system 100. Hereinafter, the sequences will be decribed in detail using the configurations of the card payment system 100 which are illustrated in FIG. 1 to FIG. 5.

FIG. 6 is a flowchart illustrating a processing sequence of the card payment system for using body information according to the present invention.

As shown in FIG. 6, in the step, S300, of the card payment system 100 of the embodiment, a user of the IC card 110 inputs multiple cryptogram search keys which are different to each other to the user terminal unit 150, and the cryptogram search keys are transmitted to the server 170 through the communication network 120.

In the step, S310, the server 170 matches multiple card information cryptograms which are saved in the server 170 at the time of the IC card 100's issuance or registration and the transmitted cryptogram search keys one by one under a certain rule such as matching in order or matching randomly, and generates the card information cryptogram table 182 where the card information cryptograms and the cryptogram search keys are matched one by one.

In the step, S320, each user of the IC card 110 input each different password key to the user terminal unit 150, and the mutiple password keys which are input by multiple users are transmitted to the server 170 through the communication network 120.

In the step, S330, the server 170 processes matching of the transmitted password keys and field values of cryptogram search keys or the cryptogram search keys themselves which are included in the card information cryptogram table 182 under a certain rule such as matching in order or matching randomly, and generates the cryptogram search key table 184 where the cryptogram search key and the password keys are matched one by one.

In the step, S340, the card reader 130 reads the IC card 110.

In the step, S350, the IC card reader unit 140 takes, from the IC card 110 for the card reader 130, the card information 112 such as the card number 112a, the expire date 112b, the name 112c, the CVC 112d, the issued ID 112e or the issuing company 112f and the first body information 114 such as the fingerprint information 114a, the iris information 114b or the photo information 114c.

In the step, S360, the body information reader unit 142 takes, from the user of the IC card 112, the second body information such as the fingerprint information, the iris information or the photo information.

In the step, S370, the body information identifying module 144 checks if the first and second body information are same, if the first and second body information are same, the sequence proceeds to the step, S380, and if they are not same, the sequence proceeds to the step, S360.

In the step, S380, payment information which includes the payment amount, the number of months for an installment plan, etc. is input to the input unit 134, and the input unit 134 provides the payment information to the payment processing module 148 of the card reader 130.

In the step, S390, the payment processing module 148 requests an input of the password key to the user terminal unit 150 via the communication network 102.

In the step, S400, after the user terminal unit 150 receives the request of the password key from the payment processing module 148, if it is decided to keep proceeding the payment, the sequence proceeds to the step, S410, if not, the sequence ends.

In the step, S410, the user terminal unit 150 transmits the password key which is input by the user to the card reader 130 via the communication network 102.

In the step, S420, the communication unit 132 receives the password key, and provides the password key to the encryption module 146.

In the step, S430, the encryption module 146 generates the card information cryptogram which corresponds to the provided password key, and provides, to the payment processing module 148, the generated card information cryptogram and the password key which is provided from the communication unit 132 of the card reader 130 to the encryption module 146.

In the step, S440, the payment processing module 148 transmits the provided card information cryptogram, the password key and the payment information to the server 170 via the communication network 102 requesting the payment approval.

In the step, S450, the server 170 receives the transmitted card information cryptogram, the password key and the payment information through the communication unit 172 of the server 170, looks for a password key which is same with the transmitted password key out of password keys which are stored in the cryptogram search key table 184, finds the cryptogram search key which matches with the same password key, and provides the found cryptogram search key to the card information cryptogram table 182.

In the step, S460, the server 170 looks for a cryptogram search key of the card information cryptogram table which is same with the cryptogram search key which is found and provided out of cryptogram search keys of the cryptogram search key table 184, finds the card information cryptogram of the card information cryptogram table which matches with the same cryptogram search key of the card information cryptogram table, and provide it to the payment processing module 176.

In the step, S470, the payment processing module 176 checks if the card information cryptogram which is transmitted from the card reader 130 to the server 170 and the other card information cryptogram which is found from the card information cryptogram table 182 are same, if the transmitted card information cryptogram and the found card information cryptogram are same, the sequence proceeds to the step, S480, and if not, the sequence proceeds to the step, S490.

If the two card information cryptograms are same, in the step, S480, the payment processing module 176 processes the payment approval, and transmits the processed payment result to the card reader 130 and the user terminal unit 150. However, if the two card information cryptograms are not same, in the step, S480, the payment is refused, and it is transmitted to the card reader 130 and the user terminal unit 150.

In the step, S500, the payment processing module 148 displays, through the display unit 136, the result of the payment approval or the refusal.

In the step, S510, the user terminal unit 150 displays, through a display device (not shown in the drawing), the result of the payment approval or the refusal.

Therefore, in the card payment system 100 of the present invention, cryptogram search keys and password keys are received from the user terminal unit 150 to the server 170, the card information cryptogram table 182 which stores card information cryptograms and cryptogram search keys and the cryptogram search key table 184 which stores cryptogram search keys and password keys are generated, card information cryptogram is received from the card reader 130 to the server 170, and the received card information cryptogram and the stored card information cryptogram are compared to process a payment approval.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A card payment system (100) comprising:
a communication network (102);
an IC card (110) saving a card information (112) and a first body information of a cardholder (114);
a card reader (130) obtaining the card information and the first body information through reading the IC card, obtaining a second body information from a user of the IC card, obtaining a user password key which is for an encryption of the card information if the first body information and the second body information are same, generating a user card information cryptogram by using the user password key, and transmitting the user password key, the user card information cryptogram and
a payment information via the communication network requesting a payment approval; and
a server (170) comprising a cryptogram search key table where a plurality of password keys and a plurality of cryptogram search keys are saved as pair and a card information cryptogram table where a plurality of card information cryptograms and a plurality of password keys are saved as pair, finding, from the cryptogram search key table, a corresponding cryptogram search key of the cryptogram search key table which corresponds to the user password key which is transmitted from the card reader, finding, from the card information cryptogram table, a corresponding card information cryptogram of the card information cryptogram table which corresponds to the corresponding cryptogram search key, processing the payment approval for the card reader if the user card information cryptogram and the corresponding card information cryptogram are same.

2. The system of claim 1, wherein the card payment system further comprises a user terminal unit which transmits the user password key to the card reader if the card reader requests the user password key to the user terminal unit via the communication network.

3. The system of claim 2, wherein the user terminal unit transmits the plurality of cryptogram search keys and the plurality of password keys to the server via the communication network for the server to generate the card information cryptogram table and the cryptogram search key table.

4. The system of claim 1 or 3, wherein the card reader
comprises:
a communication unit;
an IC card reader unit obtaining the card information and the first body information through reading the IC card;
a body information reader unit obtaining the second body information from the user of the IC card;
a body information identifying module checking if the first body information and the second body information are same;
an encryption module generating the card information cryptogram by using the user password key; and
a payment processing module, receiving the user password key if the first body information and the second body information are same at the body information identifying module, providing the user password key to the encryption module, receiving the user card information cryptogram from the encryption module, receiving the payment information, requesting the payment approval to the server, and displaying a result of the payment approval if the server processes the payment approval.

5. A method of a card payment system comprising:
generating (S310, S330), by a server, a cryptogram search key table where a plurality of password keys and a plurality cryptogram search keys are saved as pair and a card information cryptogram table where the plurality of cryptogram search keys and a plurality of card information cryptograms are saved as pair;
checking (S370), by a card reader, if a first body information which is obtained from an IC card and a second body information which is obtained from a user of the IC card are same;
generating (S430), by the card reader, a user card information cryptogram after receiving a user password key by using the user password key if the first body information and the second body information are same;
finding (S450, S460), by the server, a corresponding cryptogram search key from the cryptogram search key table which corresponds to the user password key and a corresponding card information cryptogram of the card information cryptogram table which corresponds to the corresponding cryptogram search key if the card reader requests a payment approval;
checking (S470), by the server, if the user card information cryptogram which is transmitted from the card reader and the corresponding card information cryptogram are same; and
processing (S480), by the server, the payment approval if the user card information cryptogram and the corresponding card information cryptogram are same.

6. The method of claim 5, wherein, in the generating of the server, the server generates the cryptogram search key table using a plurality of cryptogram search keys which are transmitted from a user terminal unit via a communication network, and generates the card information cryptogram table using a plurality of password keys which are transmitted from the user terminal unit via a communication network.

7. The method of claim 6, wherein, in the generating of the card reader, the card reader requests the user password key to the user terminal unit, and the user terminal unit transmits the user password key to the card reader.

## Patentansprüche

1. Kartenzahlungssystem (100), umfassend:
ein Kommunikationsnetzwerk (102);
eine IC-Karte (110), die eine Karteninformation (112) und eine erste Textinformation eines Karteninhabers (114) speichert;
einen Kartenleser (130), der die Karteninformation und die erste Textinformation durch Lesen der IC-Karte erhält, eine zweite Textinformation von einem Benutzer der IC-Karte erhält, einen Benutzerkennwortschlüssel erhält, der für eine Verschlüsselung der Karteninformation ist, wenn die erste Textinformation und die zweite Textinformation gleich sind, ein Benutzerkarteninformationskryptogramm durch Verwenden des Benutzerkennwortschlüssels erzeugt, und den Benutzerkennwortschlüssel, das Benutzerkarteninformationskryptogramm und eine Zahlungsinformation über das Kommunikationsnetzwerk sendet, um eine Zahlungsgenehmigung anzufordern; und
einen Server (170), der eine Kryptogrammsuchschlüsseltabelle, in der mehrere Kennwortschlüssel und mehrere Kryptogrammsuchschlüssel als Paar gespeichert sind, und eine Karteninformationskryptogrammtabelle umfasst, in der mehrere Karteninformationskryptogramme und mehrere Kennwortschlüssel als Paar gespeichert sind, aus der Kryptogrammsuchschlüsseltabelle einen entsprechenden Kryptogrammsuchschlüssel der Kryptogrammsuchschlüsseltabelle ermittelt, der dem Benutzerkennwortschlüssel entspricht, der vom Kartenleser gesendet wird, aus der Karteninformationskryptogrammtabelle ein entsprechendes Karteninformationskryptogramm der Karteninformationskryptogrammtabelle ermittelt, das dem entsprechenden Kryptogrammsuchschlüssel entspricht, die Zahlungsgenehmigung für den Kartenlaser verarbeitet, wenn das Benutzerkarteninformationskryptogramm und das entsprechenden Karteninformationskryptogramm gleich sind.

2. System nach Anspruch 1, wobei das Kartenzahlungssystem ferner eine Benutzerendgeräteeinheit umfasst, die den Benutzerkennwortschlüssel an den Kartenleser sendet, wenn der Kartenleser den Benutzerkennwortschlüssel über die Kommunikationsnetzwerk bei der Benutzerendgeräteeinheit anfordert.

3. System nach Anspruch 2, wobei die Benutzerendgeräteeinheit die mehreren Kryptogrammsuchschlüssel und die mehreren Kennwortschlüssel über das Kommunikationsnetzwerk an den Server sendet, damit der Server die Karteninformationskryptogrammtabelle und die Kryptogrammsuchschlüsseltabelle erzeugt.

4. System nach Anspruch 1 oder 3, wobei der Kartenleser umfasst:
eine Kommunikationseinheit;
eine IC-Kartenleseeinheit, welche die Karteninformation und die erste Textinformation durch Lesen der IC-Karte erhält;
eine Textinformationsleseeinheit, welche die zweite Textinformation vom Benutzer der IC-Karte erhält;
ein Textinformationsidentifizierungsmodul, das prüft, ob die erste Textinformation und die zweite Textinformation gleich sind;
ein Verschlüsselungsmodul, welches das Karteninformationskryptogramm durch Verwenden des Benutzerkennwortschlüssels erzeugt; und
ein Zahlungsverarbeitungsmodul, das den Benutzerkennwortschlüssel empfängt, wenn die erste Textinformation und die zweite Textinformation am Textinformationsidentifizierungsmodul gleich sind, den Benutzerkennwortschlüssel für das Verschlüsselungsmodul bereitstellt, das Benutzerkarteninformationskryptogramm vom Verschlüsselungsmodul empfängt, die Zahlungsinformation empfängt, die Zahlungsgenehmigung beim Server anfordert und ein Ergebnis der Zahlungsgenehmigung anzeigt, wenn der Server die Zahlungsgenehmigung verarbeitet.

5. Verfahren eines Kartenzahlungssystems, umfassend:
Erzeugen (S310, S330), durch einen Server einer Kryptogrammsuchschlüsseltabelle, in der mehrere Kennwortschlüssel und mehrere Kryptogrammsuchschlüssel als Paar gespeichert werden, und einer Karteninformationskryptogrammtabelle, in der mehrere Kryptogrammsuchschlüssel und mehrere Karteninformationskryptogramme als Paar gespeichert werden;
Prüfen (S370) durch einen Kartenleser, ob eine erste Textinformationen, die von einer IC-Karte erhalten wird, und eine zweite Textinformation, die von einem Benutzer der IC-Karte erhalten wird, gleich sind;
Erzeugen (S430) durch den Kartenleser eines Benutzerkarteninformationskryptogramms nach dem Empfangen eines Benutzerkennwortschlüssels durch Verwenden des Benutzerkennwortschlüssels, wenn die erste Textinformation und die zweite Textinformation gleich sind;
Ermitteln (S450, S460) durch den Server eines entsprechenden Kryptogrammsuchschlüssels aus der Kryptogrammsuchschlüsseltabelle, der dem Benutzerkennwortschlüssel entspricht, und eines entsprechenden Karteninformationskryptogramms der Karteninformationskryptogrammtabelle, das dem entsprechenden Kryptogrammsuchschlüssel entspricht, wenn der Kartenleser eine Zahlungsgenehmigung anfordert;
Prüfen (S470) durch den Server, ob das Benutzerkarteninformationskryptogramm, das vom Kartenleser gesendet wird, und das entsprechende Karteninformationskryptogramm gleich sind; und
Verarbeiten (S480) durch den Server der Zahlungsgenehmigung, wenn das Benutzerkarteninformationskryptogramm und das entsprechende Karteninformationskryptogramm gleich sind.

6. Verfahren nach Anspruch 5, wobei beim Erzeugen des Servers der Server die Kryptogrammsuchschlüsseltabelle unter Verwendung mehrerer Kryptogrammsuchschlüssel erzeugt, die von einer Benutzerendgeräteeinheit über ein Kommunikationsnetzwerk gesendet werden, und die Karteninformationskryptogrammtabelle unter Verwendung mehrerer Kennwortschlüssel erzeugt, die von der Benutzerendgeräteeinheit über ein Kommunikationsnetzwerk gesendet werden.

7. Verfahren nach Anspruch 6, wobei beim Erzeugen des Kartenlesers der Kartenleser den Benutzerkennwortschlüssel bei der Benutzerendgeräteeinheit anfordert, und die Benutzerendgeräteeinheit den Benutzerkennwortschlüssel an den Kartenleser sendet.

## Revendications

1. Système de paiement par carte (100) comprenant :
un réseau de communication (102) ;
une carte à circuits imprimés (IC) (110) sauvegardant des informations de carte (112) et des premières informations corporelles d'un titulaire de carte (114) ;
un lecteur de carte (130) obtenant les informations de carte et les premières informations corporelles par lecture de la carte IC, obtenant des secondes informations corporelles à partir d'un utilisateur de la carte IC, obtenant une clé de mot de passe d'utilisateur qui sert à chiffrer les informations de carte si les premières informations corporelles et les secondes informations corporelles sont identiques, générant un cryptogramme d'informations de carte d'utilisateur en utilisant la clé de mot de passe d'utilisateur, et transmettant la clé de mot de passe d'utilisateur, le cryptogramme d'informations de carte d'utilisateur et des informations de paiement, par l'intermédiaire du réseau de communication, demandant une approbation de paiement ; et
un serveur (170) comprenant une table de clés de recherche de cryptogramme, dans laquelle une pluralité de clés de mot de passe et une pluralité de clés de recherche de cryptogramme sont sauvegardées par paires, et une table de cryptogrammes d'informations de carte dans laquelle une pluralité de cryptogrammes d'informations de carte et une pluralité de clés de mot de passe sont sauvegardés par paires, trouvant, à partir de la table de clés de recherche de cryptogramme, une clé de recherche de cryptogramme correspondante de la table de clés de recherche de cryptogramme qui correspond à la clé de mot de passe d'utilisateur qui est transmise à partir du lecteur de carte, trouvant, à partir de la table de cryptogrammes d'informations de carte, un cryptogramme d'informations de carte correspondant de la table de cryptogrammes d'informations de carte qui correspond à la clé de recherche de cryptogramme correspondante, traitant l'approbation de paiement pour le lecteur de carte si le cryptogramme d'informations de carte d'utilisateur et le cryptogramme d'informations de carte correspondant sont identiques.

2. Système selon la revendication 1, dans lequel le système de paiement par carte comprend en outre une unité de terminal utilisateur qui transmet la clé de mot de passe d'utilisateur au lecteur de carte si le lecteur de carte demande la clé de mot de passe d'utilisateur à l'unité de terminal utilisateur par l'intermédiaire du réseau de communication.

3. Système selon la revendication 2, dans lequel l'unité de terminal utilisateur transmet la pluralité de clés de recherche de cryptogramme et la pluralité de clés de mot de passe au serveur par l'intermédiaire du réseau de communication pour amener le serveur à générer la table de cryptogrammes d'informations de carte et la table de clés de recherche de cryptogramme.

4. Système selon la revendication 1 ou 3, dans lequel le lecteur de carte comprend :
une unité de communication ;
une unité de lecteur de carte IC obtenant les informations de carte et les premières informations corporelles par lecture de la carte IC ;
une unité de lecteur d'informations corporelles obtenant les secondes informations corporelles à partir de l'utilisateur de la carte IC ;
un module d'identification d'informations corporelles vérifiant si les premières informations corporelles et les secondes informations corporelles sont identiques ;
un module de chiffrement générant le cryptogramme d'informations de carte en utilisant la clé de mot de passe d'utilisateur ; et
un module de traitement de paiement, recevant la clé de mot de passe d'utilisateur si les premières informations corporelles et les secondes informations corporelles sont identiques au niveau du module d'identification d'informations corporelles, fournissant la clé de mot de passe d'utilisateur au module de chiffrement, recevant le cryptogramme d'informations de carte d'utilisateur à partir du module de chiffrement, recevant les informations de paiement, demandant l'approbation de paiement au serveur, et affichant un résultat de l'approbation de paiement si le serveur traite l'approbation de paiement.

5. Procédé d'un système de paiement par carte comprenant :
générer (S310, S330), par un serveur, une table de clés de recherche de cryptogramme, dans laquelle une pluralité de clés de mot de passe et une pluralité de clés de recherche de cryptogramme sont sauvegardées par paires, et une table de cryptogrammes d'informations de carte dans laquelle la pluralité de clés de recherche de cryptogramme et une pluralité de cryptogrammes d'informations de carte sont sauvegardés par paires ;
vérifier (S370), par un lecteur de carte, si des premières informations corporelles qui sont obtenues à partir d'une carte IC et des secondes informations corporelles qui sont obtenues à partir d'un utilisateur de la carte IC sont identiques ;
générer (S430), par le lecteur de carte, un cryptogramme d'informations de carte d'utilisateur après la réception d'une clé de mot de passe d'utilisateur en utilisant la clé de mot de passe d'utilisateur si les premières informations corporelles et les secondes informations corporelles sont identiques ;
trouver (S450, S460), par le serveur, une clé de recherche de cryptogramme correspondante de la table de clés de recherche de cryptogramme qui correspond à la clé de mot de passe d'utilisateur et un cryptogramme d'informations de carte correspondant de la table de cryptogrammes d'informations de carte qui correspond à la clé de recherche de cryptogramme correspondante si le lecteur de carte demande une approbation de paiement ;
vérifier (S470), par le serveur, si le cryptogramme d'informations de carte d'utilisateur qui est transmis à partir du lecteur de carte et le cryptogramme d'informations de carte correspondant sont identiques ; et
traiter (S480), par le serveur, l'approbation de paiement si le cryptogramme d'informations de carte d'utilisateur et le cryptogramme d'informations de carte correspondant sont identiques.

6. Procédé selon la revendication 5, dans lequel, dans la génération du serveur, le serveur génère la table de clés de recherche de cryptogramme en utilisant une pluralité de clés de recherche de cryptogramme qui sont transmises à partir d'une unité de terminal utilisateur par l'intermédiaire d'un réseau de communication, et génère la table de cryptogrammes d'informations de carte en utilisant une pluralité de clés de mot de passe qui sont transmises à partir de l'unité de terminal utilisateur par l'intermédiaire d'un réseau de communication.

7. Procédé selon la revendication 6, dans lequel, dans la génération du lecteur de carte, le lecteur de carte demande la clé de mot de passe d'utilisateur à l'unité de terminal utilisateur, et l'unité de terminal utilisateur transmet la clé de mot de passe d'utilisateur au lecteur de carte.
